(19) Europäisches Patentamt
European Patent Office
Office européen des brevets

(11) **EP 4 622 201 A1**

(12) **EUROPEAN PATENT APPLICATION**
published in accordance with Art. 153(4) EPC

(43) Date of publication:
**24.09.2025 Bulletin 2025/39**

(21) Application number: **22969744.6**

(22) Date of filing: **30.12.2022**

(51) International Patent Classification (IPC):
***H04L 27/00*** *(2006.01)*

(52) Cooperative Patent Classification (CPC):
**H04L 27/00**

(86) International application number:
**PCT/CN2022/143790**

(87) International publication number:
**WO 2024/138599 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventor: **WANG, Jian**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHOD AND RELATED DEVICE**

(57) This application provides a communication method and a related device, to implement data processing by performing at least two clipping processing processes by using carriers as a clipping granularity in a radio frequency unit, so as to improve a clipping effect, thereby improving communication performance. In the method, a radio frequency unit determines a first parameter; and the radio frequency unit performs first clipping processing on data of a first carrier based on the first parameter, to obtain first data. In some implementation processes, the radio frequency unit performs second clipping processing based on the first data. In some implementation processes, K parameters included in the first parameter are respectively used for clipping processing of K carrier slices included in the first carrier.

FIG. 4

## Description

### TECHNICAL FIELD

This application relates to the communication field, and in particular, to a communication method and a related device.

### BACKGROUND

In a communication system, before a signal is transmitted, a signal sending device may perform clipping processing, to suppress a signal with an excessive signal peak and reduce a peak-to-average power ratio (peak-to-average power ratio, PAPR). Therefore, how to effectively perform clipping processing is an important research direction.

### SUMMARY

This application provides a communication method and a related device, to implement data processing by performing at least two clipping processing processes by using carriers as a clipping granularity on a radio frequency unit side, so as to improve a clipping effect, thereby improving communication performance.

A first aspect of this application provides a communication method. The method is applied to a radio frequency unit. The method is performed by the radio frequency unit; or the method is performed by some components (for example, a processor, a chip, or a chip system) in the radio frequency unit; or the method may be implemented by a logical module or software that can implement all or some functions of the radio frequency unit. In the first aspect and a possible implementation of the first aspect, an example in which the method is performed by the radio frequency unit is used for description. In the method, the radio frequency unit determines a first parameter; the radio frequency unit performs first clipping processing on data of a first carrier based on the first parameter, to obtain first data; and the radio frequency unit performs second clipping processing based on the first data.

According to the foregoing technical solution, after the radio frequency unit determines the first parameter, the radio frequency unit performs the first clipping processing on the data of the first carrier based on the first parameter, to obtain the first data; and the radio frequency unit performs the second clipping processing based on the first data. In other words, in a data processing process, the radio frequency unit sequentially performs the first clipping processing and the second clipping processing on the data of the first carrier. Therefore, data processing is implemented by performing at least two clipping processing processes by using carriers as a clipping granularity in the radio frequency unit, to improve a clipping effect, thereby improving communication performance.

Optionally, the radio frequency unit may determine the first parameter in a plurality of manners. For example, the radio frequency unit determines the first parameter in a pre-configuration manner. For another example, the radio frequency unit determines the first parameter by receiving the first parameter from another device (for example, a baseband unit).

It should be understood that in this application, the radio frequency unit is a network device having a radio frequency signal processing function, the baseband unit is a network device having a baseband signal processing function, and the radio frequency unit and the baseband unit may have other names.

For example, the radio frequency unit is radio equipment (radio equipment, RE), and the baseband unit is a radio equipment controller (radio equipment controller, REC).

For another example, the radio frequency unit is a remote radio unit (remote radio unit, RRU), and the baseband unit is a building baseband unit (building baseband unit, BBU).

For another example, the radio frequency unit is an active antenna unit (active antenna unit, AAU), and the baseband unit is a BBU.

For another example, the radio frequency unit is a radio unit (radio unit, RU), and the baseband unit is a distributed unit (distributed unit, DU).

Optionally, a link between the baseband unit and the radio frequency unit may be referred to as a fronthaul link, a fronthaul network, or the like.

Optionally, a communication interface between the baseband unit and the radio frequency unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

In a possible implementation of the first aspect, that the radio frequency unit performs the second clipping processing based on the first data includes: The radio frequency unit performs filtering processing based on the first data, to obtain second data; and the radio frequency unit performs the second clipping processing on the second data.

According to the foregoing technical solution, in a process of the second clipping processing, the radio frequency unit may filter the first data obtained through the first clipping processing, to obtain the second data, and perform the second clipping processing on the second data, to reduce occurrence of spectral spreading and reduce out-of-band spectral leakage.

In a possible implementation of the first aspect, the method further includes: The radio frequency unit receives a second parameter. The second parameter is used to determine a filtering coefficient for the filtering processing.

According to the foregoing technical solution, the radio frequency unit may receive the second parameter used to determine the filtering coefficient for the filtering processing, so that the radio frequency unit implements the filtering processing based on an indication of another device (for example, the baseband unit). In comparison with an implementation in which filtering processing is performed based on a fixed filtering parameter, adaptability of a filtering processing process can be improved, to improve a filtering effect.

In a possible implementation of the first aspect, the method further includes: The radio frequency unit receives a third parameter. The third parameter is used for the second clipping processing.

According to the foregoing technical solution, the radio frequency unit may receive the third parameter used to determine the second clipping processing, so that the radio frequency unit implements the second clipping processing based on an indication of another device (for example, the baseband unit). In comparison with an implementation in which clipping processing is performed based on a fixed clipping parameter, adaptability of a clipping processing process can be improved, to improve a clipping effect.

In a possible implementation of the first aspect, the method further includes: The radio frequency unit receives indication information indicating that clipping processing is enabled; or the radio frequency unit receives indication information indicating that clipping processing is disabled.

According to the foregoing technical solution, the radio frequency unit may receive the indication information indicating that the clipping processing is enabled or disabled, so that the radio frequency unit flexibly enables or disables the clipping processing based on an indication of another device (for example, the baseband unit).

A second aspect of this application provides a communication method. The method is applied to a baseband unit. The method is performed by the baseband unit; or the method is performed by some components (for example, a processor, a chip, or a chip system) in the baseband unit; or the method may be implemented by a logical module or software that can implement all or some functions of the baseband unit. In the second aspect and a possible implementation of the second aspect, an example in which the method is performed by the baseband unit is used for description. In the method, the baseband unit determines a first parameter, where the first parameter is used for first clipping processing on data of a first carrier, and a processing result of the first clipping processing is used for second clipping processing; and the baseband unit sends the first parameter.

According to the foregoing technical solution, the first parameter determined by the baseband unit is used for the first clipping processing on the data of the first carrier, and the processing result of the first clipping processing is used for the second clipping processing.

Then, after the baseband unit sends the first parameter, a radio frequency unit receives the first parameter. The radio frequency unit can perform the first clipping processing on the data of the first carrier based on the first parameter to obtain the processing result (where for example, the processing result is first data), and perform the second clipping processing based on the processing result. In other words, in a data processing process, the radio frequency unit sequentially performs the first clipping processing and the second clipping processing on the data of the first carrier based on an indication of the baseband unit. Therefore, data processing is implemented by performing at least two clipping processing processes by using carriers as a clipping granularity in the radio frequency unit, to improve a clipping effect, thereby improving communication performance.

In a possible implementation of the second aspect, a filtering processing result of the processing result of the first clipping processing is used for the second clipping processing.

According to the foregoing technical solution, in a process of processing the data of the first carrier, the radio frequency unit may filter the first data obtained through the first clipping processing, to obtain second data, and perform the second clipping processing on the second data, to reduce occurrence of spectral spreading and reduce out-of-band spectral leakage.

In a possible implementation of the second aspect, the method further includes: The baseband unit sends a second parameter. The second parameter is used to determine a filtering coefficient corresponding to the filtering processing result.

According to the foregoing technical solution, the baseband unit may send the second parameter used to determine the filtering coefficient corresponding to the filtering processing result, so that the radio frequency unit implements filtering processing based on an indication of the baseband unit. In comparison with an implementation in which filtering processing is performed based on a fixed filtering parameter, adaptability of a filtering processing process can be improved, to improve a filtering effect.

In a possible implementation of the second aspect, the method further includes: The baseband unit sends a third parameter. The third parameter is used for the second clipping processing.

According to the foregoing technical solution, the baseband unit may send the third parameter used to determine the second clipping processing, so that the radio frequency unit implements the second clipping processing based on an indication of the baseband unit. In comparison with an implementation in which clipping processing is performed based on a fixed clipping parameter, adaptability of a clipping processing process can be improved, to improve a clipping effect.

In a possible implementation of the second aspect, the method further includes: The baseband unit sends indication information indicating that clipping processing is enabled; or the baseband unit sends indication information indicating that clipping processing is disabled.

According to the foregoing technical solution, the baseband unit may send the indication information indicating that the clipping processing is enabled or disabled, so that the radio frequency unit flexibly enables or disables the clipping processing based on an indication of the baseband unit.

In a possible implementation of the second aspect, the first carrier includes K carrier slices, the first parameter includes K parameters, the K parameters are respectively used for clipping processing on the K carrier slices, and K is a positive integer.

According to the foregoing technical solution, the first parameter used for the first clipping processing on the data of the first carrier may include the K parameters, and the K parameters are respectively used for the clipping processing on the K carrier slices in the first carrier. Therefore, the radio frequency unit performs fine-grained clipping processing by using the carrier slices included in the carrier as the clipping granularity, to improve clipping performance.

In a possible implementation of the first aspect or the second aspect, a time domain resource occupied by the data of the first carrier is N time units, and N is a positive integer.

According to the foregoing technical solution, in a process of the first clipping processing, the first parameter is used to perform clipping processing on the data that is of the first carrier and that occupies the N time units, so that a clipping parameter of the carrier data can be applied to a clipping processing process in a time dimension.

Optionally, the time unit may include an orthogonal frequency division multiplexing (orthogonal frequency division multiplexing, OFDM) symbol, a frame, a subframe, a slot, or the like.

In a possible implementation of the first aspect or the second aspect, the second parameter is determined based on the first parameter.

According to the foregoing technical solution, the second parameter used to determine the filtering coefficient corresponding to the filtering processing result is determined based on the first parameter, that is, the filtering parameter is determined based on a clipping parameter of the first clipping processing, so that the filtering parameter for performing the filtering processing on the carrier data obtained through the first clipping processing can be adaptively adjusted based on the clipping parameter, to improve adaptability of the filtering processing.

In a possible implementation of the first aspect or the second aspect, the second parameter is determined based on the first parameter and at least one of the following: a passband of the first carrier, a stopband of the first carrier, or a transition band of the first carrier.

According to the foregoing technical solution, the second parameter is determined based on the first parameter and at least one of the foregoing including bandwidth information, for example, the passband, the stopband, or the transition band of the first carrier, so that the second parameter used to determine the filtering coefficient corresponding to the filtering processing result can be adaptively adjusted based on the carrier data, to improve adaptability of the filtering processing.

In a possible implementation of the first aspect or the second aspect, the first parameter is determined based on at least one of the following: highest power of resource elements (resource elements, REs) in a time unit in which the first carrier is located, average power of REs in a time unit in which the first carrier is located, scheduling information of the first carrier, or bandwidth information of the first carrier.

For example, the time unit is an OFDM symbol, a frame, a subframe, or a slot.

According to the foregoing technical solution, the first parameter used for the first clipping processing on the data of the first carrier may be determined based on at least one of the foregoing, to improve flexibility of implementing the solution.

A third aspect of this application provides a communication method. The method is applied to a radio frequency unit. The method is performed by the radio frequency unit; or the method is performed by some components (for example, a processor, a chip, or a chip system) in the radio frequency unit; or the method may be implemented by a logical module or software that can implement all or some functions of the radio frequency unit. In the third aspect and a possible implementation of the third aspect, an example in which the method is performed by the radio frequency unit is used for description. In the method, the radio frequency unit determines a first parameter; and the radio frequency unit performs first clipping processing on data of a first carrier based on the first parameter, to obtain first data, where the first carrier includes K carrier slices, the first parameter includes K parameters, the K parameters are respectively used for clipping processing on the K carrier slices, and K is a positive integer.

According to the foregoing technical solution, after the radio frequency unit determines the first parameter, the radio frequency unit performs the first clipping processing on the data of the first carrier based on the first parameter, to obtain the first data. The K parameters included in the first parameter are respectively used for the clipping processing on the K carrier slices included in the first carrier. Therefore, the radio frequency unit performs fine-grained clipping processing by using the carrier slices included in the carrier as a clipping granularity, to improve clipping performance.

In a possible implementation of the third aspect, the method further includes: The radio frequency unit performs second clipping processing based on the first data.

According to the foregoing technical solution, in a data processing process, the radio frequency unit sequentially performs the first clipping processing and the second clipping processing on the data of the first carrier. Therefore, data processing is implemented by performing at least two clipping processing processes in the radio frequency unit, to improve a clipping effect thereby improving communication performance.

In a possible implementation of the third aspect, that the radio frequency unit performs the second clipping processing based on the first data includes: The radio frequency unit performs filtering processing based on the first data, to obtain second data; and the radio frequency unit performs the second clipping processing on the second data.

According to the foregoing technical solution, in a process of the second clipping processing, the radio frequency unit may filter the first data obtained through the first clipping processing, to obtain the second data, and perform the second clipping processing on the second data, to reduce occurrence of spectral spreading and reduce out-of-band spectral leakage.

In a possible implementation of the third aspect, the method further includes: The radio frequency unit receives a second parameter. The second parameter is used to determine a filtering coefficient for the filtering processing.

According to the foregoing technical solution, the radio frequency unit may receive the second parameter used to determine the filtering coefficient for the filtering processing, so that the radio frequency unit implements the filtering processing based on an indication of another device (for example, a baseband unit). In comparison with an implementation in which filtering processing is performed based on a fixed filtering parameter, adaptability of a filtering processing process can be improved, to improve a filtering effect.

In a possible implementation of the third aspect, the method further includes: The radio frequency unit receives a third parameter. The third parameter is used for the second clipping processing.

According to the foregoing technical solution, the radio frequency unit may receive the third parameter used to determine the second clipping processing, so that the radio frequency unit implements the second clipping processing based on an indication of another device (for example, the baseband unit). In comparison with an implementation in which clipping processing is performed based on a fixed clipping parameter, adaptability of a clipping processing process can be improved, to improve a clipping effect.

In a possible implementation of the third aspect, the method further includes: The radio frequency unit receives indication information indicating that clipping processing is enabled; or the radio frequency unit receives indication information indicating that clipping processing is disabled.

According to the foregoing technical solution, the radio frequency unit may receive the indication information indicating that the clipping processing is enabled or disabled, so that the radio frequency unit flexibly enables or disables the clipping processing based on an indication of another device (for example, the baseband unit).

A fourth aspect of this application provides a communication method. The method is applied to a baseband unit. The method is performed by the baseband unit; or the method is performed by some components (for example, a processor, a chip, or a chip system) in the baseband unit; or the method may be implemented by a logical module or software that can implement all or some functions of the baseband unit. In the fourth aspect and a possible implementation of the fourth aspect, an example in which the method is performed by the baseband unit is used for description. In the method, a baseband unit determines a first parameter, where the first parameter is used for first clipping processing on data of a first carrier, the first carrier includes K carrier slices, the first parameter includes K parameters, the K parameters are respectively used for clipping processing on the K carrier slices, and K is a positive integer; and the baseband unit sends the first parameter.

According to the foregoing technical solution, the first parameter determined by the baseband unit is used for the first clipping processing on the data of the first carrier, and a processing result of the first clipping processing is used for second clipping processing. The K parameters included in the first parameter are respectively used for the clipping processing on the K carrier slices included in the first carrier. Therefore, the radio frequency unit performs fine-grained clipping processing by using the carrier slices included in the carrier as a clipping granularity, to improve clipping performance.

In a possible implementation of the fourth aspect, the processing result of the first clipping processing is used for the second clipping processing.

According to the foregoing technical solution, after the baseband unit sends the first parameter, the radio frequency unit receives the first parameter. The radio frequency unit can perform the first clipping processing on the data of the first carrier based on the first parameter to obtain the processing result (where for example, the processing result is first data), and perform the second clipping processing based on the processing result. In other words, in a data processing process, the radio frequency unit sequentially performs the first clipping processing and the second clipping processing on the data of the first carrier based on an indication of the baseband unit. Therefore, data processing is implemented by performing at least two clipping processing processes in the radio frequency unit, to improve a clipping effect, thereby improving communication performance.

In a possible implementation of the fourth aspect, a filtering processing result of the processing result of the first clipping processing is used for the second clipping processing.

According to the foregoing technical solution, in a process of processing the data of the first carrier, the radio frequency unit may filter the first data obtained through the first clipping processing, to obtain second data, and perform the second clipping processing on the second data, to reduce occurrence of spectral spreading and reduce out-of-band spectral leakage.

In a possible implementation of the fourth aspect, the method further includes: The baseband unit sends a second parameter. The second parameter is used to determine a filtering coefficient corresponding to the filtering processing result.

According to the foregoing technical solution, the baseband unit may send the second parameter used to determine the filtering coefficient corresponding to the filtering processing result, so that the radio frequency unit implements filtering processing based on an indication of the baseband unit. In comparison with an implementation in which filtering processing is performed based on a fixed filtering parameter, adaptability of a filtering processing process can be improved, to improve a filtering effect.

In a possible implementation of the fourth aspect, the method further includes: The baseband unit sends a third parameter. The third parameter is used for the second clipping processing.

According to the foregoing technical solution, the baseband unit may send the third parameter used to determine the second clipping processing, so that the radio frequency unit implements the second clipping processing based on an indication of the baseband unit. In comparison with an implementation in which clipping processing is performed based on a fixed clipping parameter, adaptability of a clipping processing process can be improved, to improve a clipping effect.

In a possible implementation of the fourth aspect, the method further includes: The baseband unit sends indication information indicating that clipping processing is enabled; or the baseband unit sends indication information indicating that clipping processing is disabled.

According to the foregoing technical solution, the baseband unit may send the indication information indicating that the clipping processing is enabled or disabled, so that the radio frequency unit flexibly enables or disables the clipping processing based on an indication of the baseband unit.

In a possible implementation of the third aspect or the fourth aspect, a time domain resource occupied by the data of the first carrier is N time units, and N is a positive integer.

According to the foregoing technical solution, in a process of the first clipping processing, the first parameter is used to perform clipping processing on the data that is of the first carrier and that occupies the N time units, so that a clipping parameter of the carrier data can be applied to a clipping processing process in a time dimension.

In a possible implementation of the third aspect or the fourth aspect, the second parameter is determined based on the first parameter.

According to the foregoing technical solution, the second parameter used to determine the filtering coefficient corresponding to the filtering processing result is determined based on the first parameter, that is, the filtering parameter is determined based on a clipping parameter of the first clipping processing, so that the filtering parameter for performing the filtering processing on the carrier data obtained through the first clipping processing can be adaptively adjusted based on the clipping parameter, to improve adaptability of the filtering processing.

In a possible implementation of the third aspect or the fourth aspect, the second parameter is determined based on the first parameter and at least one of the following: a passband of the first carrier, a stopband of the first carrier, or a transition band of the first carrier.

According to the foregoing technical solution, the second parameter is determined based on the first parameter and at least one of the foregoing including bandwidth information, for example, the passband, the stopband, or the transition band of the first carrier, so that the second parameter used to determine the filtering coefficient corresponding to the filtering processing result can be adaptively adjusted based on the carrier data, to improve adaptability of the filtering processing.

In a possible implementation of the third aspect or the fourth aspect, the first parameter is determined based on at least one of the following: highest power of resource elements REs in a time unit in which the first carrier is located, average power of REs in a time unit in which the first carrier is located, scheduling information of the first carrier, or bandwidth information of the first carrier.

For example, the time unit is an OFDM symbol, a frame, a subframe, or a slot.

According to the foregoing technical solution, the first parameter used for the first clipping processing on the data of the first carrier may be determined based on at least one of the foregoing, to improve flexibility of implementing the solution.

A fifth aspect of this application provides a communication apparatus. The communication apparatus may implement the method according to any one of the first aspect or the possible implementations of the first aspect. The communication apparatus includes a corresponding unit or module configured to perform the foregoing method. The unit or the module included in the communication apparatus can be implemented by software and/or hardware. For example, the apparatus may be a radio frequency unit; or the apparatus may be a component (for example, a processor, a chip, or a chip system) in a radio frequency unit; or the apparatus may be a logical module or software that can implement all or some functions of a radio frequency unit.

The communication apparatus includes a processing module. The processing module is configured to determine a first parameter. The processing module is further configured to perform first clipping processing on data of a first carrier based on the first parameter, to obtain first data. The processing module is further configured to perform second clipping processing based on the first data.

In a possible implementation of the fifth aspect, that the processing module is specifically configured to perform the second clipping processing based on the first data includes: performing filtering processing based on the first data, to obtain second data; and performing the second clipping processing on the second data.

In a possible implementation of the fifth aspect, the apparatus further includes a transceiver module. The transceiver module is configured to receive a second parameter, and the second parameter is used to determine a filtering coefficient for the filtering processing.

In a possible implementation of the fifth aspect, the apparatus further includes a transceiver module. The transceiver module is configured to receive a third parameter, and the third parameter is used for the second clipping processing.

In a possible implementation of the fifth aspect, the apparatus further includes a transceiver module. The transceiver module is configured to receive indication information indicating that clipping processing is enabled; or the transceiver module is configured to receive indication information indicating that clipping processing is disabled.

A sixth aspect of this application provides a communication apparatus. The communication apparatus may implement the method according to any one of the second aspect or the possible implementations of the second aspect. The communication apparatus includes a corresponding unit or module configured to perform the foregoing method. The unit or the module included in the communication apparatus can be implemented by software and/or hardware. For example, the apparatus may be a baseband unit; or the apparatus may be a component (for example, a processor, a chip, or a chip system) in a baseband unit; or the apparatus may be a logical module or software that can implement all or some functions of a baseband unit.

The communication apparatus includes a processing module and a transceiver module. The processing module is configured to determine a first parameter. The first parameter is used for first clipping processing on data of a first carrier, and a processing result of the first clipping processing is used for second clipping processing. The transceiver module is configured to send the first parameter.

In a possible implementation of the sixth aspect, a filtering processing result of the processing result of the first clipping processing is used for the second clipping processing.

In a possible implementation of the sixth aspect, the transceiver module is further configured to send a second parameter, and the second parameter is used to determine a filtering coefficient corresponding to the filtering processing result.

In a possible implementation of the sixth aspect, the transceiver module is further configured to send a third parameter, and the third parameter is used for the second clipping processing.

In a possible implementation of the sixth aspect, the transceiver module is further configured to send indication information indicating that clipping processing is enabled; or the baseband unit sends indication information indicating that clipping processing is disabled.

In a possible implementation of the sixth aspect, the first carrier includes K carrier slices, the first parameter includes K parameters, the K parameters are respectively used for clipping processing on the K carrier slices, and K is a positive integer.

In a possible implementation of the fifth aspect or the sixth aspect, a time domain resource occupied by the data of the first carrier is N time units, and N is a positive integer.

In a possible implementation of the fifth aspect or the sixth aspect, the second parameter is determined based on the first parameter.

In a possible implementation of the fifth aspect or the sixth aspect, the second parameter is determined based on the first parameter and at least one of the following: a passband of the first carrier, a stopband of the first carrier, or a transition band of the first carrier.

In a possible implementation of the fifth aspect or the sixth aspect, the first parameter is determined based on at least one of the following: highest power of resource elements REs in a time unit in which the first carrier is located, average power of REs in a time unit in which the first carrier is located, scheduling information of the first carrier, or bandwidth information of the first carrier.

A seventh aspect of this application provides a communication apparatus. The communication apparatus may implement the method according to any one of the third aspect or the possible implementations of the third aspect. The communication apparatus includes a corresponding unit or module configured to perform the foregoing method. The unit or the module included in the communication apparatus can be implemented by software and/or hardware. For example, the apparatus may be a radio frequency unit; or the apparatus may be a component (for example, a processor, a chip, or a chip system) in a radio frequency unit; or the apparatus may be a logical module or software that can implement all or some functions of a radio frequency unit.

The communication apparatus includes a processing module. The processing module is configured to determine a first parameter. The processing module is further configured to perform first clipping processing on data of a first carrier based on the first parameter, to obtain first data, where the first carrier includes K carrier slices, the first parameter includes K parameters, the K parameters are respectively used for clipping processing on the K carrier slices, and K is a positive integer.

In a possible implementation of the seventh aspect, the apparatus further includes a transceiver module. The transceiver module is configured to perform second clipping processing based on the first data.

In a possible implementation of the seventh aspect, the processing module is specifically configured to: perform filtering processing based on the first data, to obtain second data; and perform the second clipping processing on the second data.

In a possible implementation of the seventh aspect, the apparatus further includes a transceiver module. The transceiver module is configured to receive a second parameter, and the second parameter is used to determine a filtering coefficient for the filtering processing.

In a possible implementation of the seventh aspect, the apparatus further includes a transceiver module. The transceiver module is configured to receive a third parameter, and the third parameter is used for the second clipping processing.

In a possible implementation of the seventh aspect, the apparatus further includes a transceiver module. The transceiver module is configured to receive indication information indicating that clipping processing is enabled; or the radio frequency unit receives indication information indicating that clipping processing is disabled.

An eighth aspect of this application provides a communication apparatus. The communication apparatus may implement the method according to any one of the fourth aspect or the possible implementations of the fourth aspect. The communication apparatus includes a corresponding unit or module configured to perform the foregoing method. The unit or the module included in the communication apparatus can be implemented by software and/or hardware. For example, the apparatus may be a baseband unit; or the apparatus may be a component (for example, a processor, a chip, or a chip system) in a baseband unit; or the apparatus may be a logical module or software that can implement all or some functions of a baseband unit.

The communication apparatus includes a processing module and a transceiver module. The processing module is configured to determine a first parameter, where the first parameter is used for first clipping processing on data of a first carrier, the first carrier includes K carrier slices, the first parameter includes K parameters, the K parameters are respectively used for clipping processing on the K carrier slices, and K is a positive integer. The transceiver module is configured to send the first parameter.

In a possible implementation of the eighth aspect, a processing result of the first clipping processing is used for second clipping processing.

In a possible implementation of the eighth aspect, a filtering processing result of the processing result of the first clipping processing is used for the second clipping processing.

In a possible implementation of the eighth aspect, the transceiver module is further configured to send a second parameter, and the second parameter is used to determine a filtering coefficient corresponding to the filtering processing result.

In a possible implementation of the eighth aspect, the transceiver module is further configured to send a third parameter, and the third parameter is used for the second clipping processing.

In a possible implementation of the eighth aspect, the transceiver module is further configured to send indication information indicating that clipping processing is enabled; or the baseband unit sends indication information indicating that clipping processing is disabled.

In a possible implementation of the eighth aspect, a time domain resource occupied by the data of the first carrier is N time units, and N is a positive integer.

In a possible implementation of the seventh aspect or the eighth aspect, the second parameter is determined based on the first parameter.

In a possible implementation of the seventh aspect or the eighth aspect, the second parameter is determined based on the first parameter and at least one of the following: a passband of the first carrier, a stopband of the first carrier, or a transition band of the first carrier.

In a possible implementation of the seventh aspect or the eighth aspect, the first parameter is determined based on at least one of the following: highest power of resource elements REs in a time unit in which the first carrier is located, average power of REs in a time unit in which the first carrier is located, scheduling information of the first carrier, or bandwidth information of the first carrier.

A ninth aspect of this application provides a communication apparatus, including at least one processor. The at least one processor is coupled to a memory. The processor is configured to perform the method according to any one of the first aspect or the possible implementations of the first aspect.

For example, the memory is configured to store a program or instructions, and the at least one processor is configured to execute the program or the instructions, so that the apparatus implements the method according to any one of the first aspect or the possible implementations of the first aspect.

A tenth aspect of this application provides a communication apparatus, including at least one processor. The at least one processor is coupled to a memory. The processor is configured to perform the method according to any one of the second aspect or the possible implementations of the second aspect.

For example, the memory is configured to store a program or instructions, and the at least one processor is configured to execute the program or the instructions, so that the apparatus implements the method according to any one of the second aspect or the possible implementations of the second aspect.

An eleventh aspect of this application provides a communication apparatus, including at least one processor. The at least one processor is coupled to a memory. The processor is configured to perform the method according to any one of the third aspect or the possible implementations of the third aspect.

For example, the memory is configured to store a program or instructions, and the at least one processor is configured to execute the program or the instructions, so that the apparatus implements the method according to any one of the fourth aspect or the possible implementations of the fourth aspect.

A twelfth aspect of this application provides a communication apparatus, including at least one processor. The at least one processor is coupled to a memory. The processor is configured to perform the method according to any one of the fourth aspect or the possible implementations of the fourth aspect.

For example, the memory is configured to store a program or instructions, and the at least one processor is configured to execute the program or the instructions, so that the apparatus implements the method according to any one of the fourth aspect or the possible implementations of the fourth aspect.

A thirteenth aspect of this application provides a communication apparatus, including at least one logic circuit and an input/output interface. The logic circuit is configured to perform the method according to any one of the possible implementations of the first aspect to the fourth aspect.

A fourteenth aspect of this application provides a computer-readable storage medium. The computer-readable storage medium is configured to store one or more computer-executable instructions. When the computer-executable instructions are executed by a processor, the processor performs the method according to any one of the possible implementations of the first aspect to the fourth aspect.

A fifteenth aspect of this application provides a computer program product (also referred to as a computer program). When the computer program product is executed by a processor, the processor performs the method according to any one of the possible implementations of the first aspect to the fourth aspect.

A sixteenth aspect of this application provides a chip system. The chip system includes at least one processor, configured to support a communication apparatus in implementing a function in any one of the possible implementations of the first aspect to the fourth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A seventeenth aspect of this application provides a communication system. The communication system includes the communication apparatus in the fifth aspect and the call apparatus in the sixth aspect; or the communication system includes the communication apparatus in the seventh aspect and the communication apparatus in the eighth aspect; or the communication system includes the communication apparatus in the ninth aspect and the communication apparatus in the tenth aspect; or the communication system includes the communication apparatus in the eleventh aspect and the communication apparatus in the twelfth aspect.

For technical effects brought by any one of designs of the fifth aspect to the seventeenth aspect, refer to the technical effects brought by the first aspect to the fourth aspect and different designs of the first aspect to the fourth aspect. Details are not described herein again.

## BRIEF DESCRIPTION OF DRAWINGS

FIG. 1 to FIG. 3 are some diagrams of application scenarios according to this application;
FIG. 4 to FIG. 6 are some diagrams of a communication method according to this application;
FIG. 7a to FIG. 7c are some diagrams of application instances of a communication method according to this application;
FIG. 8 is a diagram of a communication method according to this application; and
FIG. 9 to FIG. 11 are some diagrams of communication apparatuses according to this application.

## DESCRIPTION OF EMBODIMENTS

The following describes technical solutions of this application with reference to the accompanying drawings in this application. All other solutions obtained by a person skilled in the art based on this application without creative efforts shall fall within the protection scope of this application.

Some terms in this application are first described, to help a person skilled in the art have a better understanding.

(1) A terminal device may be a wireless terminal device that can receive scheduling and indication information of a network device. The wireless terminal device may be a device that provides a user with voice and/or data connectivity, a handheld device with a wireless connection function, or another processing device connected to a wireless modem.

The terminal device may communicate with one or more core networks or the Internet through a radio access network (radio access network, RAN). The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), ultra-reliable low-latency communication (ultra-reliable low-latency communication, URLLC), virtual reality, augmented reality, industrial control, self-driving, telemedicine, smart grid, smart furniture, smart office, smart wearable, smart transportation, smart city, or satellite communication. The terminal may be a mobile phone, a tablet computer, a computer having a wireless transceiver function, a wearable device, a vehicle, an uncrewed aerial vehicle, a helicopter, an airplane, a hot air balloon, a ship, a robot, a mechanical arm, a smart home device, or the like. A device form of the terminal is not limited in embodiments of this application.

(2) A network device may be a device in a wireless network. For example, the network device may be a radio access network (radio access network, RAN) node (or device) that connects the terminal device to the wireless network.

In some implementations, the network device may further include a satellite, aircraft, or the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus that can support the network device in implementing the function, for example, a processor, a circuit, a chip, or a chip system. The apparatus may be installed in the network device or connected to the network device for use. In the technical solutions provided in this application, the technical solutions provided in this application are described by using an example in which the apparatus configured to implement the function of the network device is the network device.

In this application, an apparatus configured to implement a function of the terminal device may be a terminal device, or may be an apparatus that can support the terminal device in implementing the function, for example, a processor, a circuit, a chip, or a chip system. The apparatus may be installed in the terminal device or connected to the terminal device for use. In the technical solutions provided in this application, the technical solutions provided in this application are described by using an example in which the apparatus configured to implement the function of the terminal device is a terminal device.

(3) The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in this application are used to distinguish between a plurality of objects, and are not used to limit a sequence, a time sequence, a priority, or importance of the plurality of objects.

This application may be applied to various possible communication systems. For example, this application may be applied to a long term evolution (long term evolution, LTE) system, a new radio (new radio, NR) system, an open radio access network (open RAN, O-RAN, or ORAN), a cloud radio access network (cloud radio access network, CRAN), or a new radio vehicle-to-everything (NR vehicle-to-everything, NR V2X) system. Alternatively, this application may be applied to a system in hybrid networking of a plurality of access technologies (for example, LTE and 5G). Alternatively, this application may be applied to a device-to-device (device-to-device, D2D) communication system, a machine-to-machine (machine-to-machine, M2M) communication system, Internet of Things (Internet of Things, IoT), or an uncrewed aerial vehicle communication system. Alternatively, this application may be applied to a non-terrestrial communication system, for example, a satellite communication system or a high-altitude communication platform.

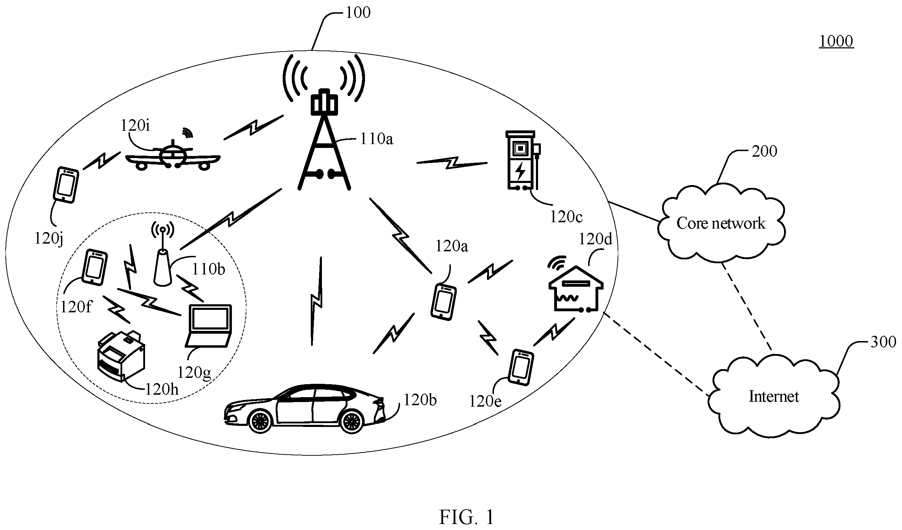

FIG. 1 is a diagram of a possible and non-limiting application scenario according to this application. The solutions provided in this application may be applied to a communication system 1000 shown in FIG. 1. As shown in FIG. 1, the communication system 1000 includes a radio access network (radio access network, RAN) 100 and a core network 200. The RAN 100 may include at least one RAN device (for example, 110a and 110b in FIG. 1, which are collectively referred to as 110). The RAN 100 may further include at least one terminal (for example, 120a to 120j in FIG. 1, which are collectively referred to as 120). The terminals 120a to 120j are connected to the RAN device 110 in a wireless manner. The RAN 100 may further include another RAN device, for example, a wireless relay device and/or a wireless backhaul device (not shown in FIG. 1). An access network device 110 is connected to the core network 200 in a wireless or wired manner. A core network device in the core network and the access network device in the radio access network may be different physical devices, or may be a same physical device that integrates a logical function of the core network and a logical function of the radio access network. The terminals may be connected to each other in a wireless manner. Access network devices may be connected to each other in a wired or wireless manner. FIG. 1 is merely a diagram. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an open radio access network (open RAN, O-RAN or ORAN), or a cloud radio access network (cloud radio access network, CRAN). Alternatively, the RAN 100 may be a communication system that integrates the foregoing two or more systems.

The RAN device 110 may also be sometimes referred to as a RAN node, a RAN entity, an access node, or the like, and forms a part of a communication system, to help a terminal implement radio access. A plurality of RAN nodes 110 in the communication system 1000 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. The RAN node 110 and the terminal 120 are sometimes referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), a transmission reception point (transmission reception point, TRP), a next-generation NodeB (next-generation NodeB, gNB) in a 5G mobile communication system, a next-generation base station in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle-mounted device, or the like. For example, an access network device in a vehicle-to-everything (vehicle-to-everything, V2X) technology may be a roadside unit (roadside unit, RSU). A plurality of access network devices in the communication system may be base stations of a same type, or may be base stations of different types. The base station may communicate with a terminal, or may communicate with the terminal via a relay station. The terminal may communicate with a plurality of base stations in different access technologies.

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in radio equipment or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. The CU (or the CU-CP and the CU-UP), the DU, and the RU can implement different protocol layer functions.

Communication between the access network device and the terminal device may comply with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

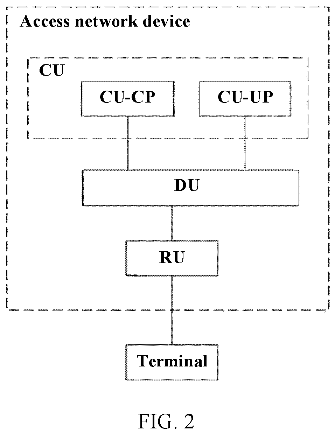

In an implementation example, as shown in FIG. 2, the access network device may include at least one CU and at least one DU. This design may be referred to as CU and DU separation. One CU may be connected to one or more DUs. The CU and the DU may be classified based on protocol layers of a wireless network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, the functions of the protocol layer above the PDCP layer are set on the CU, and the functions of the PDCP layer and the protocol layer below the PDCP layer are set on the DU. This is not limited. When the CU includes a CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer. Names of the CU and the DU are not limited in this application. For example, the CU may be referred to as a first access network element, and the DU may be referred to as a second access network element.

The division into processing functions of the CU and the DU based on protocol layers is merely an example, and may be another division manner. For example, the CU or the DU may be divided to have functions of more protocol layers, or the CU or the DU is divided to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may alternatively be performed based on service types or other system requirements, for example, based on latency. Functions whose processing time needs to meet a latency requirement are set on the DU, and functions whose processing time does not need to meet the latency requirement are set on the CU.

The CU may be connected to the core network. Optionally, the CU may have some functions of the core network.

Further, some functions of the DU may be set separately. As shown in FIG. 2, some functions may be implemented by a radio unit (radio unit, RU). The RU may have a radio frequency function. A name of the RU is not limited in this application. For example, the RU may be referred to as a third access network element. The DU and the RU may be split or separated at the PHY layer. For example, the DU may implement a higher-layer function of the PHY layer, and the RU may implement a lower-layer function of the PHY layer or implement the lower-layer function and the radio frequency function. The higher-layer function of the PHY layer includes a function closer to the MAC layer, and the lower-layer function of the PHY layer includes a function closer to the radio frequency. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT)/inverse fast Fourier transform (inverse fast Fourier transform, IFFT), beamforming, extraction and filtering of a physical random access channel (physical random access channel, PRACH), or the like. The RU may perform radio frequency signal communication with the terminal device through an air interface. A precoding function of the PHY layer may be in the DU or the RU. There may be various possible manners of splitting the DU and the RU. This is not limited.

There is an interface between the DU and the RU. For example, based on different splitting manners, the interface between the DU and the RU may be a common public radio interface (common public radio interface, CPRI) or an enhanced common public radio interface (enhanced common public radio interface, eCPRI).

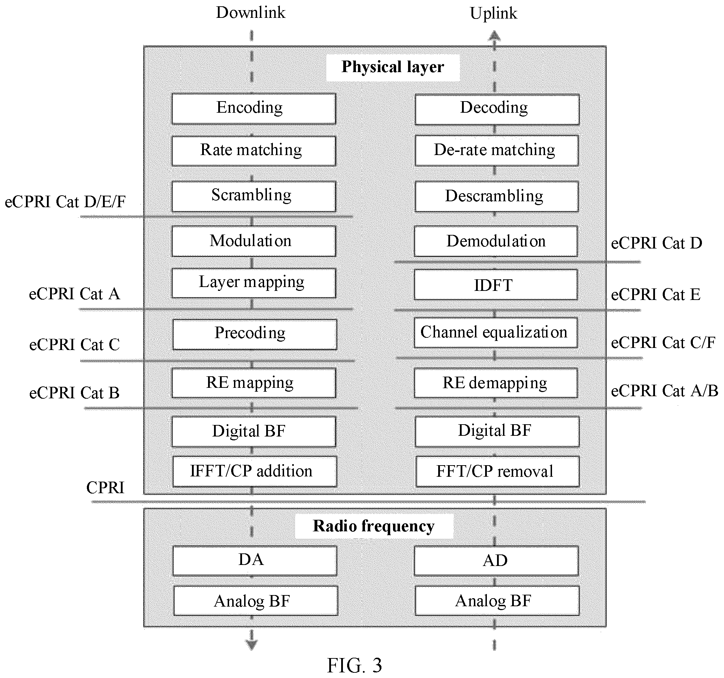

FIG. 3 is a diagram of an architecture of an access network device. The access network device includes one or more functional modules, configured to implement signal processing. As shown in FIG. 3, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast Fourier transform, IFFT)/cyclic prefix (cyclic prefix, CP) addition, decoding, de-rate matching, descrambling, demodulation, inverse discrete Fourier transform (inverse discrete Fourier transform, IDFT), channel equalization (or channel estimation), RE demapping, digital BF, fast Fourier transform (fast Fourier transform, FFT)/CP removal, digital-to-analog (digital-to-analog, DA) conversion, analog BF, analog-to-digital (analog-to-digital, AD) conversion, or analog BF.

The one or more functional modules may be implemented by software, hardware, or a combination of software and hardware. Physically, the one or more functional modules may be discrete or integrated. It may be understood that the foregoing functional modules are merely examples. The access network device may include, according to a design, more other modules (for example, a scheduling module, a power control module, a hybrid automatic repeat request (hybrid automatic repeat request, HARQ) module, a flow control module, a mobility management module, or an artificial intelligence (artificial intelligence, AI) module), or does not include a functional module shown in FIG. 3 (for example, not include a digital BF module). The access network device further includes a fronthaul (fronthaul, FH) interface between a DU and an RU, to implement communication between the DU and the RU. The fronthaul interface includes but is not limited to a CPRI or an eCPRI. In a possible implementation, the DU is located in a BBU, the RU is located in an RRU/AAU/RRH, and an interface between the BBU and the RRU/AAU/RRH may also be referred to as a fronthaul interface. To implement the fronthaul interface, the BBU and the RRU/AAU/RRH may be connected through a fronthaul network, or the DU and the RU may be connected through a fronthaul network. For example, the fronthaul network includes but is not limited to a fiber direct connection network and a wavelength division network.

The access network device may support one or more categories of fronthaul interfaces, and different fronthaul interfaces correspond to DUs and RUs having different functions. As shown in FIG. 3, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, in comparison with the CPRI, some downlink and/or uplink baseband functions are offloaded from the DU to the RU for implementation. Different manners of splitting the DU and the RU correspond to eCPRIs of different categories (categories, Cats for short). FIG. 3 shows six examples of the eCPRIs, which are represented as Cat A, Cat B, Cat C, Cat D, Cat E, and Cat F (which may also be represented as Option A to F or Option 1 to 6, or in another manner). It may be understood that there may be another manner of splitting the DU and the RU, that is, there may be another category of eCPRI.

eCPRI Cat A is used as an example. For downlink transmission, with layer mapping as a splitting point, the DU is configured to implement the layer mapping and one or more preceding functions (that is, one or more of encoding, rate matching, scrambling, modulation, or the layer mapping), and another function (for example, one or more of RE mapping, digital BF, or IFFT/CP addition) after the layer mapping is implemented in the RU. For uplink transmission, with RE demapping as a splitting point, the DU is configured to implement the demapping and one or more preceding functions (that is, one or more of decoding, de-rate matching, descrambling, demodulation, IDFT, channel equalization, or the RE demapping), and another function (for example, one or more of digital BF or FFT/CP removal) after the demapping is implemented in the RU.

Similarly, eCPRI Cat B, Cat C, Cat D, Cat E, and Cat F correspond to different manners of splitting the DU and the RU. A splitting point and a function before the splitting point are implemented by the DU, and a function after the splitting point is implemented by the RU. For splitting points for various categories of eCPRIs, refer to FIG. 3. Details are not described one by one. For example, for eCPRI Cat B, for downlink transmission, RE mapping is used as a splitting point, and for uplink transmission, RE demapping is used as a splitting point. For uplink transmission, the RE mapping and a function before the RE mapping are implemented by the DU, and a function after the RE mapping and a radio frequency function are implemented by the RU. For downlink transmission, the RE demapping and a function before the RE demapping are implemented by the DU, and a function after the RE demapping and a radio frequency function are implemented by the RU.

Splitting manners for the eCPRIs may be symmetric for uplink and downlink, for example, for eCPRI Cat B and Cat C shown in FIG. 3. Alternatively, splitting manners for the eCPRIs may be asymmetric for uplink and downlink, for example, for eCPRI Cat A, Cat D, Cat E, and Cat F shown in FIG. 3. This is not limited. Optionally, for the uplink and/or the downlink, different splitting manners may be configured for different channels or different channel groups, that is, different categories of eCPRIs are configured. One group of channels may include one or more channels.

In a possible design, the DU is located in the BBU, and the RU is located in the RRU/AAU/RRH. A processing unit configured to implement a baseband function in the BBU is referred to as a baseband high (baseband high, BBH) unit. A processing unit configured to implement a baseband function in the RRU/AAU/RRH is referred to as a baseband low (baseband low, BBL) unit.

In a communication system, before a signal is transmitted, a signal sending device may perform clipping processing, to suppress a signal with an excessive signal peak and reduce a peak-to-average power ratio (peak-to-average power ratio, PAPR). For example, a communication signal is generated based on an OFDM technology. An OFDM symbol is formed by superimposing a plurality of independently modulated subcarrier signals. When phases of the subcarriers are the same or similar, the superimposed signals are modulated by using signals with a same initial phase, to generate a large instantaneous power peak, and further bring a high peak-to-average ratio. Due to a limited dynamic range of a common power amplifier, it is extremely easy for an OFDM signal with a high peak-to-average ratio to enter a non-linear region of the power amplifier, leading to non-linear distortion of the signal, and causing significant spectral extension interference and in-band signal distortion. This affects a demodulation result, or even causes the power amplifier to be burned out in severe cases.

In a possible implementation, the signal sending device implements a clipping algorithm in an intermediate radio frequency subsystem (for example, deployed in radio equipment like an RRU/AAU/RRH) to reduce a PAPR, protect the power amplifier, and improve efficiency of the power amplifier. For example, in a clipping processing process of the signal sending device, a fixed signal threshold may be determined in a pre-configuration manner, and a to-be-sent signal is subsequently suppressed based on the signal threshold. In other words, a signal threshold used to implement clipping processing is fixed.

Optionally, commonly used clipping methods include the following:

> 1. Hard clipping: The hard clipping is a simplest clipping method, severely degrades spectral quality, and is generally not used as a clipping method. However, the method can be used to suppress large signal spikes and prevent a power amplifier from being burned out.
> 2. IQ (where I represents in-phase (in-phase) and Q represents quadrature (quadrature)) joint clipping: For phase modulation signals, an amplitude ratio of I and Q signals remains unchanged during clipping, to reduce impact on phase distortion.
> 3. Peak cancellation (Peak Cancellation, PC): A peak of a signal is extracted and then processed, for example, through filtering, to prevent spectral spreading. Finally, the peak is reversely superimposed on an original signal to cancel the peak.
> 4. Adaptive weight peak cancellation (adaptive weight peak-cancellation, AWPC): The AWPC is a clipping method for OFDM, and can implement corresponding processing based on a modulation scheme and a power level.
> 5. Kernel clipping (or pulse clipping): In comparison with PC, the Kernel clipping provides a filtering solution with fewer resources.

However, in the communication system, the signal transmitted by the signal sending device is not fixed (that is, a peak distribution feature of the signal may change). The foregoing clipping processing process implemented based on a fixed signal threshold for all to-be-sent signals has poor adaptability. Consequently, a clipping effect is easily degraded, affecting communication performance. For example, when the signal threshold is set to an excessively high value, missed clipping may easily occur, leading to a risk of burning out the power amplifier. For another example, when the signal threshold is set to an excessively low value, clipping overheads may be excessively high, leading to excessively high implementation complexity.

For example, in a scenario in which a signal is subject to power aggregation (power aggregation, PA), power boosting (power boosting, PB) or in another scenario, a peak distribution feature of the signal changes, leading to an increase in peaks that exceed the threshold. If an intermediate frequency clipping algorithm is designed for a worst scenario, implementation overheads are high and complexity is high. If an intermediate frequency clipping algorithm is designed for a typical scenario, although implementation complexity is reduced, adaptability of the intermediate frequency clipping algorithm is poor, and when a peak feature of the signal changes, missed clipping occurs, affecting robustness of the power amplifier, and posing a risk of burning out the power amplifier. Therefore, how to implement clipping optimization is an urgent technical problem to be resolved.

To resolve the foregoing problem, this application provides a communication method and a related device, to implement data processing by performing at least two clipping processing processes by using carriers as a clipping granularity in a radio frequency unit, so as to improve a clipping effect, thereby improving communication performance. The following provides detailed descriptions with reference to the accompanying drawings.

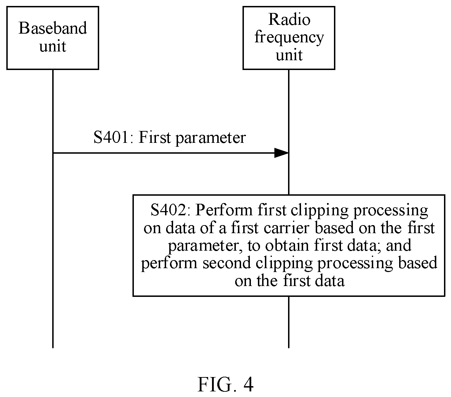

FIG. 4 is a diagram of a communication method according to this application. The method includes the following steps.

S401: A baseband unit sends a first parameter. Correspondingly, a radio frequency unit receives the first parameter in step S401.

S402: The radio frequency unit performs first clipping processing on data of a first carrier based on the first parameter, to obtain first data; and the radio frequency unit performs second clipping processing based on the first data.

It should be understood that in this application, the radio frequency unit is a network device having a radio frequency signal processing function, the baseband unit is a network device having a baseband signal processing function, and the radio frequency unit and the baseband unit may have other names.

For example, the radio frequency unit is radio equipment (radio equipment, RE), and the baseband unit is a radio equipment controller (radio equipment controller, REC).

For another example, the radio frequency unit is a remote radio unit (remote radio unit, RRU), and the baseband unit is a building baseband unit (building baseband unit, BBU).

For another example, the radio frequency unit is an active antenna unit (active antenna unit, AAU), and the baseband unit is a BBU.

For another example, the radio frequency unit is a radio unit (radio unit, RU), and the baseband unit is a distributed unit (distributed unit, DU).

Optionally, a link between the baseband unit and the radio frequency unit may be referred to as a fronthaul link, a fronthaul network, or the like.

Optionally, a communication interface between the baseband unit and the radio frequency unit may be referred to as a common public radio interface (common public radio interface, CPRI), an enhanced common public radio interface (enhanced common public radio interface, eCPRI), a fronthaul interface in an open radio access network (open radio access network, ORAN or O-RAN), or another interface name. This is not limited herein.

In a possible implementation, the first parameter sent by the baseband unit in step S401 are determined based on at least one of the following: highest power of resource elements (resource elements, REs) in a time unit in which the first carrier is located, average power of REs in a time unit in which the first carrier is located, scheduling information of the first carrier, or bandwidth information of the first carrier. Specifically, the first parameter used for the first clipping processing on the data of the first carrier may be determined based on at least one of the foregoing, to improve flexibility of implementing the solution.

For example, the time unit is an OFDM symbol, a frame, a subframe, or a slot.

Optionally, in step S402, in addition to receiving the first parameter from the baseband unit to determine the first parameter, the radio frequency unit may further determine the first parameter in another manner. For example, the radio frequency unit determines the first parameter in a pre-configuration manner. For another example, the radio frequency unit determines the first parameter by receiving the first parameter from another device (for example, a remote network management device).

In a possible implementation, in step S402, a process in which the radio frequency unit performs the second clipping processing based on the first data includes: The radio frequency unit performs filtering processing based on the first data, to obtain second data; and the radio frequency unit performs the second clipping processing on the second data. Specifically, in a process of the second clipping processing, the radio frequency unit may filter the first data obtained through the first clipping processing, to obtain the second data, and perform the second clipping processing on the second data, to reduce occurrence of spectral spreading and reduce out-of-band spectral leakage.

Optionally, before step S402, the method further includes: The radio frequency unit receives a second parameter. The second parameter is used to determine a filtering coefficient for the filtering processing. Specifically, the radio frequency unit may receive the second parameter used to determine the filtering coefficient for the filtering processing, so that the radio frequency unit implements the filtering processing based on an indication of another device (for example, the baseband unit). In comparison with an implementation in which filtering processing is performed based on a fixed filtering parameter, adaptability of a filtering processing process can be improved, to improve a filtering effect.

In a possible implementation, the second parameter is determined based on the first parameter. Specifically, the second parameter used to determine the filtering coefficient corresponding to a filtering processing result is determined based on the first parameter, that is, the filtering parameter is determined based on a clipping parameter of the first clipping processing, so that the filtering parameter for performing the filtering processing on the carrier data obtained through the first clipping processing can be adaptively adjusted based on the clipping parameter, to improve adaptability of the filtering processing.

In a possible implementation, the second parameter is determined based on the first parameter and at least one of the following: a passband of the first carrier, a stopband of the first carrier, or a transition band of the first carrier. Specifically, the second parameter is determined based on the first parameter and at least one of the foregoing including bandwidth information, for example, the passband, the stopband, or the transition band of the first carrier, so that the second parameter used to determine the filtering coefficient corresponding to the filtering processing result can be adaptively adjusted based on the carrier data, to improve adaptability of the filtering processing.

Optionally, before step S402, the method further includes: The radio frequency unit receives a third parameter. The third parameter is used for the second clipping processing. Specifically, the radio frequency unit may receive the third parameter used to determine the second clipping processing, so that the radio frequency unit implements the second clipping processing based on an indication of another device (for example, the baseband unit). In comparison with an implementation in which clipping processing is performed based on a fixed clipping parameter, adaptability of a clipping processing process can be improved, to improve a clipping effect.

Optionally, before step S402, the method further includes: The radio frequency unit receives indication information indicating that clipping processing is enabled; or the radio frequency unit receives indication information indicating that clipping processing is disabled. Specifically, the radio frequency unit may receive the indication information indicating that the clipping processing is enabled or disabled, so that the radio frequency unit flexibly enables or disables the clipping processing based on an indication of another device (for example, the baseband unit).

In a possible implementation, a time domain resource occupied by the data of the first carrier relating to the first parameter is N time units, and N is a positive integer. Specifically, in a process of the first clipping processing, the first parameter is used to perform clipping processing on the data that is of the first carrier and that occupies the N time units, so that a clipping parameter of the carrier data can be applied to a clipping processing process in a time dimension.

Optionally, the time unit may include an orthogonal frequency division multiplexing (orthogonal frequency division multiplexing, OFDM) symbol, a frame, a subframe, a slot, or the like.

Based on the technical solution shown in FIG. 4, after the radio frequency unit receives the first parameter in step S401, the radio frequency unit performs the first clipping processing on the data of the first carrier based on the first parameter in step S402, to obtain the first data; and the radio frequency unit performs the second clipping processing based on the first data in step S402. In other words, in a data processing process, the radio frequency unit sequentially performs the first clipping processing and the second clipping processing on the data of the first carrier. Therefore, data processing is implemented by performing at least two clipping processing processes by using carriers as a clipping granularity in the radio frequency unit, to improve a clipping effect, thereby improving communication performance.

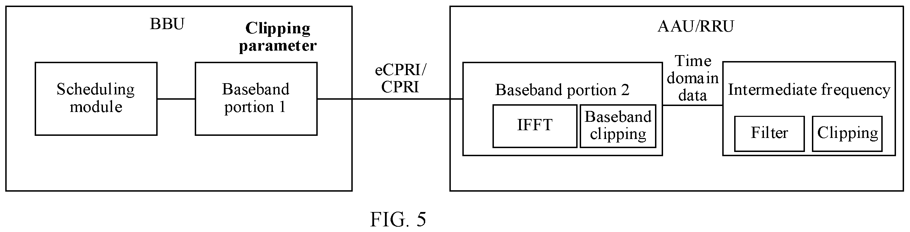

In an application example of the technical solution shown in FIG. 4, the foregoing technical solution may be applied to an application scenario shown in FIG. 5. As shown in FIG. 5, a baseband unit (namely, a BBU) includes a scheduling module and a baseband portion 1 (for example, BBH), a radio frequency unit (namely, an AAU/RRU) includes a baseband portion 2 (for example, BBL) and a clipping module (denoted as baseband clipping in the figure) that is located in the baseband portion 2 and that is used for first clipping processing, an intermediate frequency includes a filter and a clipping module (denoted as clipping in the figure) used for second clipping processing.

Optionally, during actual application, the clipping module used for the first clipping processing may be disposed at another position. For example, the clipping module used for the first clipping processing is disposed in the radio frequency unit and is independent of the baseband portion 2 and the intermediate frequency module, or the clipping module used for the first clipping processing is disposed in the intermediate frequency module of the radio frequency unit, or has another implementation. FIG. 5 is merely an implementation example.

For example, a communication interface between the baseband unit and the radio frequency unit is an eCPRI/CPRI. Physical layer processing of a baseband system is divided into two parts: One part is performed in the BBU (denoted as the baseband portion 1 in the figure), and the other part is performed in the AAU/RRU (denoted as the baseband portion 2 in the figure). For example, the communication interface is of eCPRI Cat A. As described in FIG. 3 above, for downlink transmission, with layer mapping as a splitting point, the BBU is configured to implement the layer mapping and one or more preceding functions (that is, one or more of encoding, rate matching, scrambling, modulation, or the layer mapping, which is/are considered as the baseband portion 1 in the figure), and another function (for example, one or more of precoding, RE mapping, digital BF, or IFFT/CP addition, which is/are considered as the baseband portion 2 in the figure) after the layer mapping is implemented in the RRU. For uplink transmission, with RE demapping as a splitting point, the BBU is configured to implement the demapping and one or more preceding functions (that is, one or more of decoding, de-rate matching, descrambling, demodulation, IDFT, channel equalization, or the RE demapping, which are considered as the baseband portion 1 in the figure), and another function (for example, one or more of digital BF or FFT/CP removal, which are considered as the baseband portion 2 in the figure) after the demapping is implemented in the RRU. Similarly, for eCPRI Cat B, Cat C, Cat D, Cat E, and Cat F, and another possible implementation, in correspondence to different manners of splitting the BBU and the RRU, a signal processing module executed by the BBU may be considered as the "baseband portion 1", and a signal processing module executed by the RRU may be considered as the "baseband portion 2".

When the technical solution shown in FIG. 4 is executed in the application scenario shown in FIG. 5, in a process in which the baseband unit and the radio frequency unit perform the foregoing at least two levels of clipping processing, processing processes of the scheduling module, a baseband clipping module (in the "baseband portion 2"), and the intermediate frequency module are involved. In an implementation example, during clipping, a cooperation relationship between subsystems is described as follows:

The scheduling module calculates power allocation for each carrier (or carrier slice) and each symbol, and determines a power threshold $TP_{n,j}$ (that is, the first parameter includes $TP_{n,j}$) output by the baseband clipping module, where n is a symbol number, and j is a carrier number (or a carrier slice number).

The baseband clipping module performs amplitude limiting on an output time-domain signal based on the power threshold $TP_{n,j}$ provided by the scheduling module through the eCPRI/CPRI. Based on the method, a probability of threshold-exceeding peaks in the intermediate frequency module can be effectively reduced, and signal peak distribution is controlled within an operable range of intermediate radio frequency clipping.

The intermediate frequency module provides a shaping filtering function at an intermediate frequency input to prevent, through filtering, spectral spreading caused by baseband clipping. Then, a signal is processed by a conventional intermediate radio frequency clipping module.

In addition, a communication process between the baseband unit (namely, the BBU) and the radio frequency unit (namely, the AAU/RRU) includes the following steps.

A scheduling control module is deployed in the BBU, the baseband clipping module is deployed in the RRU/AAU, and the BBU communicates with the RRU/AAU through a CPRI or eCPRI.

The BBU needs to transmit a clipping parameter (for example, baseband clipping enable, and a clipping power threshold $TP_{n,j}$) to the RRU/AAU through a fronthaul interface.

The clipping power threshold $TP_{n,j}$ is indicated based on a carrier (or carrier slice number) and a symbol.

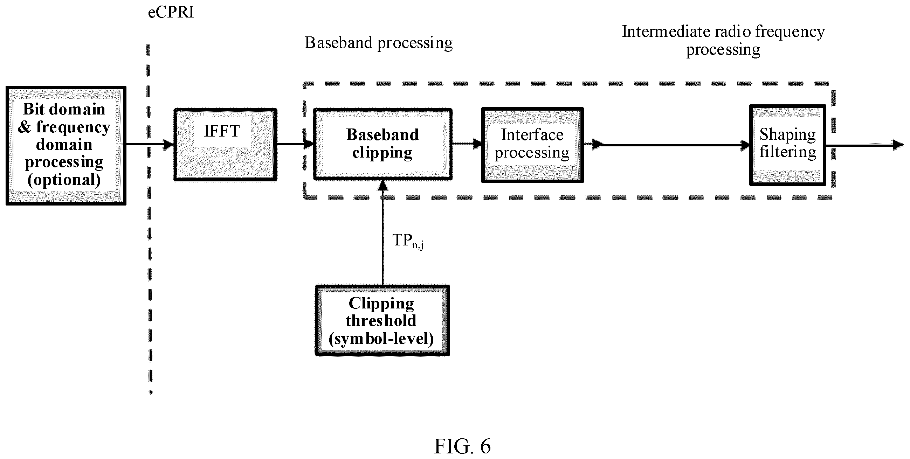

Optionally, the clipping processing may be implemented through a process shown in FIG. 6. In FIG. 6, for example, an interface between the baseband unit and the radio frequency unit is an eCPRI. As shown in FIG. 6, a processing process on a left side of the eCPRI is performed by the baseband unit, and includes a bit (bit) domain processing process and a frequency domain processing process (optional) of a signal. A processing process on a right side of the eCPRI is performed by the radio frequency unit, and includes IFFT, a baseband clipping module (configured to perform first clipping processing), interface processing, and shaping filtering processing (configured to perform filtering processing).

In FIG. 6, the baseband clipping module performs symbol-level amplitude limiting on a time domain data IQ signal obtained through the IFFT. The processing process may include various implementations.

For example, the baseband clipping module may separately perform amplitude limiting on I and Q paths of a complex signal, and an amplitude limiting value A (where the amplitude limiting value A is denoted as $TP_{n,j}$) is determined at a symbol level by the scheduling module. The clipping process may be performed in the following manner:

$$y = \begin{cases} -A, & x < -A \\ x, & -A < x < A \\ A, & x > A \end{cases}.$$

y represents a signal obtained through clipping, and x represents a signal that is not clipped.

For another example, the baseband clipping module may be performed in a manner, for example, hard clipping, PC, or IQ joint clipping.

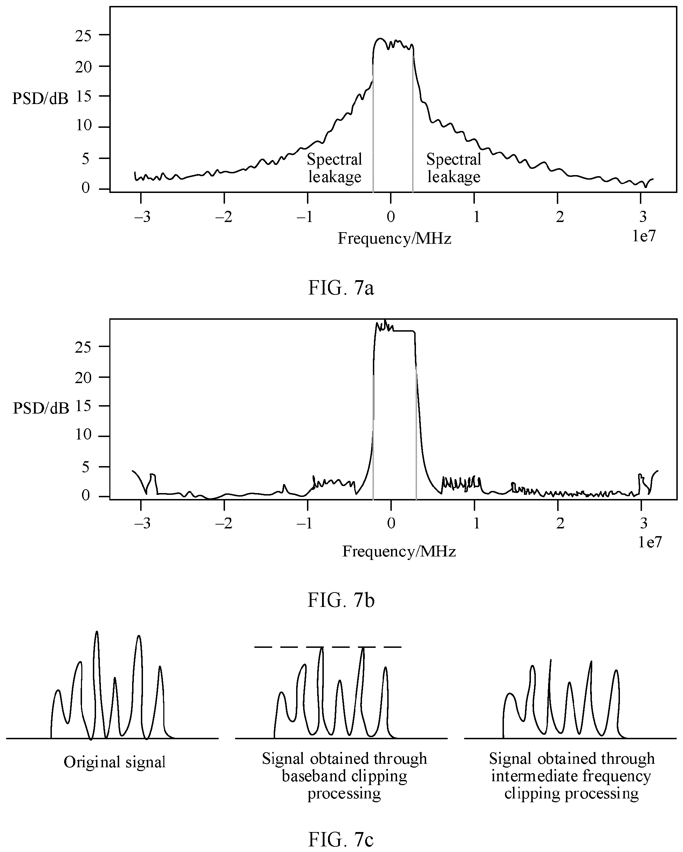

For example, in FIG. 5, an execution effect of a shaping filtering processing module configured to perform filtering processing is shown in FIG. 7a and FIG. 7b. FIG. 7a shows a signal spectrum before shaping filtering, and FIG. 7b shows a signal spectrum after the shaping filtering. It can be learned that, after shaping filtering processing, out-of-band spectral leakage can be reduced, to improve communication efficiency.

For example, FIG. 7c shows an execution effect of performing the first clipping processing and the second clipping processing. It can be learned that, when a signal peak of an original signal is excessively large, the first clipping processing may be performed to obtain first data (denoted as a signal obtained through baseband clipping processing in the figure), and the second clipping processing is performed based on the first data to obtain second data (denoted as a signal obtained through intermediate frequency clipping processing in the figure). Therefore, data processing is implemented by performing at least two clipping processing processes by using carriers as a clipping granularity in the radio frequency unit, and a limiting function is added to implement efficient time-domain signal processing, so that a probability of threshold-exceeding peaks in the intermediate frequency module can be effectively reduced, and signal peak distribution is controlled as much as possible within an operable range of intermediate radio frequency clipping. In addition, the baseband unit and the radio frequency unit jointly perform clipping, so that a PAPR is controllable, there is no missed clipping, and a power amplifier is protected, to improve a clipping effect, thereby improving communication performance.

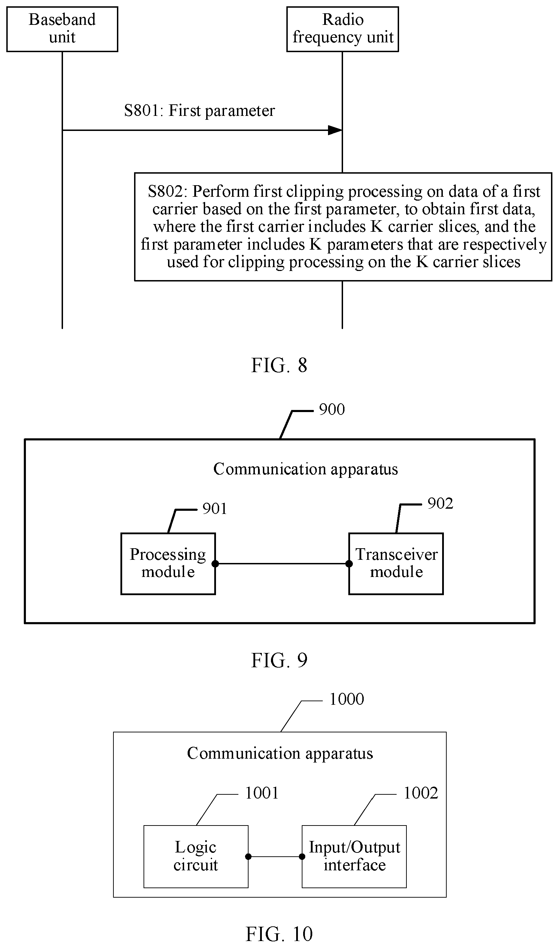

FIG. 8 is a diagram of a communication method according to this application. The method includes the following steps.

S801: A baseband unit sends a first parameter.

S802: The radio frequency unit performs first clipping processing on data of a first carrier based on the first parameter, to obtain first data, where the first carrier includes K carrier slices, the first parameter includes K parameters, the K parameters are respectively used for clipping processing on the K carrier slices, and K is a positive integer.

In a possible implementation, after the radio frequency unit performs the first clipping processing to obtain first data in step S802, the method further includes: The radio frequency unit performs second clipping processing based on the first data. Specifically, in a data processing process, the radio frequency unit sequentially performs the first clipping processing and the second clipping processing on the data of the first carrier. Therefore, data processing is implemented by performing at least two clipping processing processes in the radio frequency unit, to improve a clipping effect, thereby improving communication performance.

Optionally, a process in which the radio frequency unit performs second clipping processing based on the first data includes: The radio frequency unit performs filtering processing based on the first data, to obtain second data; and the radio frequency unit performs the second clipping processing on the second data. Specifically, in a process of the second clipping processing, the radio frequency unit may filter the first data obtained through the first clipping processing, to obtain the second data, and perform the second clipping processing on the second data, to reduce occurrence of spectral spreading and reduce out-of-band spectral leakage.

In a possible implementation, in an implementation process shown in FIG. 8, the method further includes: The radio frequency unit receives a second parameter. The second parameter is used to determine a filtering coefficient for filtering processing. Specifically, the radio frequency unit may receive the second parameter used to determine the filtering coefficient for the filtering processing, so that the radio frequency unit implements the filtering processing based on an indication of another device (for example, the baseband unit). In comparison with an implementation in which filtering processing is performed based on a fixed filtering parameter, adaptability of a filtering processing process can be improved, to improve a filtering effect.

Optionally, for a process of determining the first parameter and the second parameter that may exist, refer to FIG. 4 above and a related implementation process of FIG. 4 to implement a corresponding technical effect. Details are not described herein again.

In a possible implementation, in the implementation process shown in FIG. 8, the method further includes: The radio frequency unit receives a third parameter. The third parameter is used for the second clipping processing. Specifically, the radio frequency unit may receive the third parameter used to determine the second clipping processing, so that the radio frequency unit implements the second clipping processing based on an indication of another device (for example, the baseband unit). In comparison with an implementation in which clipping processing is performed based on a fixed clipping parameter, adaptability of a clipping processing process can be improved, to improve a clipping effect.

In a possible implementation, in the implementation process shown in FIG. 8, the method further includes: The radio frequency unit receives indication information indicating that clipping processing is enabled; or the radio frequency unit receives indication information indicating that clipping processing is disabled. Specifically, the radio frequency unit may receive the indication information indicating that the clipping processing is enabled or disabled, so that the radio frequency unit flexibly enables or disables the clipping processing based on an indication of another device (for example, the baseband unit).

In a possible implementation, a time domain resource occupied by the data of the first carrier is N time units, and N is a positive integer. Specifically, in a process of the first clipping processing, the first parameter is used to perform clipping processing on the data that is of the first carrier and that occupies the N time units, so that a clipping parameter of the carrier data can be applied to a clipping processing process in a time dimension.

Based on the technical solution shown in FIG. 8, after the radio frequency unit receives the first parameter in step S801, the radio frequency unit performs the first clipping processing on the data of the first carrier based on the first parameter in step S802, to obtain the first data. The K parameters included in the first parameter are respectively used for the clipping processing on the K carrier slices included in the first carrier. Therefore, the radio frequency unit performs fine-grained clipping processing by using the carrier slices included in the carrier as a clipping granularity, to improve clipping performance.

To implement functions in the foregoing method provided in this application, a device that performs the foregoing method may include a hardware structure and/or a software module, and implement functions in a form of the hardware structure, the software module, or a combination of the hardware structure and software module. Whether a function in the foregoing functions is performed by using the hardware structure, the software module, or the combination of the hardware structure and the software module depends on particular applications and design constraints of the technical solutions.

Refer to FIG. 9. This application provides a communication apparatus 900. The apparatus 900 includes a processing module 901 and a transceiver module 902.

In an implementation example, the communication apparatus 900 may implement functions of the radio frequency unit in the foregoing method, and therefore can also implement beneficial effects of the foregoing method. In this application, the communication apparatus 900 may be a radio frequency unit, or may be a software module, an integrated circuit, a component, or the like in the radio frequency unit, for example, a chip. This is not limited. The following uses an example in which the communication apparatus 900 is a radio frequency unit for description.

Specifically, the processing module 901 is configured to determine a first parameter. The processing module 901 is further configured to perform first clipping processing on data of a first carrier based on the first parameter, to obtain first data. The processing module is further configured to perform second clipping processing based on the first data.

In a possible implementation, that the processing module 901 is specifically configured to perform the second clipping processing based on the first data includes: performing filtering processing based on the first data, to obtain second data; and performing the second clipping processing on the second data.

In a possible implementation, the apparatus further includes a transceiver module 902. The transceiver module 902 is configured to receive a second parameter, and the second parameter is used to determine a filtering coefficient for filtering processing.

In a possible implementation, the apparatus further includes a transceiver module 902. The transceiver module 902 is configured to receive a third parameter, and the third parameter is used for the second clipping processing.

In a possible implementation, the apparatus further includes a transceiver module 902. The transceiver module 902 is configured to receive indication information indicating that clipping processing is enabled; or the transceiver module 902 is configured to receive indication information indicating that clipping processing is disabled.

In another implementation example, the communication apparatus 900 may implement functions of the baseband unit in the foregoing method, and therefore can also implement beneficial effects of the foregoing method. In this application, the communication apparatus 900 may be a baseband unit, or may be a software module, an integrated circuit, a component, or the like in the baseband unit, for example, a chip. This is not limited. The following uses an example in which the communication apparatus 900 is a baseband unit for description.

Specifically, the processing module 901 is configured to determine a first parameter. The first parameter is used for first clipping processing on data of a first carrier, and a processing result of the first clipping processing is used for second clipping processing. The transceiver module 902 is configured to send the first parameter.

In a possible implementation, a filtering processing result of the processing result of the first clipping processing is used for the second clipping processing.

In a possible implementation, the transceiver module 902 is further configured to send a second parameter, and the second parameter is used to determine a filtering coefficient corresponding to the filtering processing result.

In a possible implementation, the transceiver module 902 is further configured to send a third parameter, and the third parameter is used for the second clipping processing.

In a possible implementation, the transceiver module 902 is further configured to send indication information indicating that clipping processing is enabled; or the baseband unit sends indication information indicating that clipping processing is disabled.

In a possible implementation, the first carrier includes K carrier slices, the first parameter includes K parameters, the K parameters are respectively used for clipping processing on the K carrier slices, and K is a positive integer.

In a possible implementation, a time domain resource occupied by the data of the first carrier is N time units, and N is a positive integer.

In a possible implementation, the second parameter is determined based on the first parameter.

In a possible implementation, the second parameter is determined based on the first parameter and at least one of the following: a passband of the first carrier, a stopband of the first carrier, or a transition band of the first carrier.

In a possible implementation, the first parameter is determined based on at least one of the following: highest power of resource elements REs in a time unit in which the first carrier is located, average power of REs in a time unit in which the first carrier is located, scheduling information of the first carrier, or bandwidth information of the first carrier.

In another implementation example, the communication apparatus 900 may implement functions of the radio frequency unit in the foregoing method, and therefore can also implement beneficial effects of the foregoing method. In this application, the communication apparatus 900 may be a radio frequency unit, or may be a software module, an integrated circuit, a component, or the like in the radio frequency unit, for example, a chip. This is not limited. The following uses an example in which the communication apparatus 900 is a radio frequency unit for description.

Specifically, the processing module 901 is configured to determine a first parameter. The processing module 901 is further configured to perform first clipping processing on data of a first carrier based on the first parameter, to obtain first data. The first carrier includes K carrier slices, the first parameter includes K parameters, the K parameters are respectively used for clipping processing on the K carrier slices, and K is a positive integer.

In a possible implementation, the apparatus further includes a transceiver module 902. The transceiver module 902 is configured to perform second clipping processing based on the first data.

In a possible implementation, the processing module 901 is specifically configured to: perform filtering processing based on the first data, to obtain second data; and perform the second clipping processing on the second data.

In a possible implementation, the apparatus further includes a transceiver module 902. The transceiver module 902 is configured to receive a second parameter, and the second parameter is used to determine a filtering coefficient for filtering processing.

In a possible implementation, the apparatus further includes a transceiver module 902. The transceiver module 902 is configured to receive a third parameter, and the third parameter is used for the second clipping processing.

In a possible implementation, the apparatus further includes a transceiver module 902. The transceiver module 902 is configured to receive indication information indicating that clipping processing is enabled; or the radio frequency unit receives indication information indicating that clipping processing is disabled.

In another implementation example, the communication apparatus 900 may implement functions of the baseband unit in the foregoing method, and therefore can also implement beneficial effects of the foregoing method. In this application, the communication apparatus 900 may be a baseband unit, or may be a software module, an integrated circuit, a component, or the like in the baseband unit, for example, a chip. This is not limited. The following uses an example in which the communication apparatus 900 is a baseband unit for description.

Specifically, the processing module 901 is configured to determine a first parameter. The first parameter is used for first clipping processing on data of a first carrier, the first carrier includes K carrier slices, the first parameter includes K parameters, the K parameters are respectively used for clipping processing on the K carrier slices, and K is a positive integer. The transceiver module 902 is configured to send the first parameter.

In a possible implementation, the processing result of the first clipping processing is used for the second clipping processing.

In a possible implementation, a filtering processing result of the processing result of the first clipping processing is used for the second clipping processing.

In a possible implementation, the transceiver module 902 is further configured to send a second parameter, and the second parameter is used to determine a filtering coefficient corresponding to the filtering processing result.

In a possible implementation, the transceiver module 902 is further configured to send a third parameter, and the third parameter is used for the second clipping processing.

In a possible implementation, the transceiver module 902 is further configured to send indication information indicating that clipping processing is enabled; or the baseband unit sends indication information indicating that clipping processing is disabled.

In a possible implementation, a time domain resource occupied by the data of the first carrier is N time units, and N is a positive integer.

In a possible implementation, the second parameter is determined based on the first parameter.

In a possible implementation, the second parameter is determined based on the first parameter and at least one of the following: a passband of the first carrier, a stopband of the first carrier, or a transition band of the first carrier.

In a possible implementation, the first parameter is determined based on at least one of the following: highest power of resource elements REs in a time unit in which the first carrier is located, average power of REs in a time unit in which the first carrier is located, scheduling information of the first carrier, or bandwidth information of the first carrier.

It should be noted that for content such as an information execution process of the units in the communication apparatus 900, specifically refer to the descriptions of the foregoing method in this application. Details are not described herein again.

FIG. 10 is another diagram of a structure of communication apparatus 1000 according to this application. The communication apparatus 1000 includes at least a logic circuit 1001. The communication apparatus 1000 may be a chip or an integrated circuit.

Optionally, the communication apparatus further includes an input/output interface 1002.

The transceiver module 902 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, the logic circuit 1001 may be configured to determine a first parameter. The logic circuit 1001 is further configured to perform first clipping processing on data of a first carrier based on the first parameter, to obtain first data. The logic circuit 1001 is further configured to perform second clipping processing based on the first data. It should be understood that the logic circuit 1001 and the input/output interface 1002 may further perform another step performed by the radio frequency unit in any one of the foregoing examples, and implement corresponding beneficial effects. Details are not described herein again.

Optionally, the logic circuit 1001 is configured to determine a first parameter. The first parameter is used for first clipping processing on data of a first carrier, a processing result of the first clipping processing is used for second clipping processing. The input/output interface 1002 is configured to send the first parameter. It should be understood that the logic circuit 1001 and the input/output interface 1002 may further perform another step performed by the baseband unit in any one of the foregoing examples, and implement corresponding beneficial effects. Details are not described herein again.

Optionally, the logic circuit 1001 is configured to determine a first parameter. The logic circuit 1001 is further configured to perform first clipping processing on data of a first carrier based on the first parameter, to obtain first data. The first carrier includes K carrier slices, the first parameter includes K parameters, the K parameters are respectively used for clipping processing on the K carrier slices, and K is a positive integer. It should be understood that the logic circuit 1001 and the input/output interface 1002 may further perform another step performed by the radio frequency unit in any one of the foregoing examples, and implement corresponding beneficial effects. Details are not described herein again.

Specifically, the logic circuit 1001 is configured to determine a first parameter. The first parameter is used for first clipping processing on data of a first carrier, the first carrier includes K carrier slices, the first parameter includes K parameters, the K parameters are respectively used for clipping processing on the K carrier slices, and K is a positive integer. The input/output interface 1002 is configured to send the first parameter. It should be understood that the logic circuit 1001 and the input/output interface 1002 may further perform another step performed by the baseband unit in any one of the foregoing examples, and implement corresponding beneficial effects. Details are not described herein again.

In a possible implementation, the processing module 901 shown in FIG. 9 may be the logic circuit 1001 in FIG. 10.

Optionally, the logic circuit 1001 may be a processing apparatus, and some or all of functions of the processing apparatus may be implemented by software. Some or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any one of the method embodiments.

Optionally, the processing apparatus may include only a processor. A memory configured to store a computer program is located outside the processing apparatus, and the processor is connected to the memory via a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more of a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip; or any combination of the foregoing chips or processors.

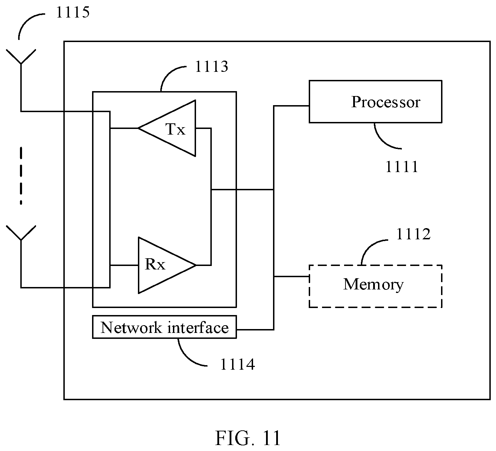

FIG. 11 is a diagram of a structure of a communication apparatus 1100 in the foregoing examples according to this application. The communication apparatus 1100 may be specifically a communication apparatus used as a baseband unit or a radio frequency unit in the foregoing examples. For a structure of the communication apparatus, refer to the structure shown in FIG. 11.

The communication apparatus 1100 includes at least one processor 1111 and at least one network interface 1114.

Further, optionally, the communication apparatus further includes at least one memory 1112, at least one transceiver 1113, and one or more antennas 1115. The processor 1111, the memory 1112, the transceiver 1113, and the network interface 1114 are connected, for example, connected via a bus. In this application, the connection may include various types of interfaces, transmission lines, buses, or the like. This is not limited in this application. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The processor 1111 is mainly configured to: process a communication protocol and communication data, control the entire communication apparatus, execute a software program, and process data of the software program, for example, is configured to support the communication apparatus in performing the actions described in the foregoing implementation processes. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 1111 in FIG. 11 may integrate functions of the baseband processor and the central processing unit. A person skilled in the art may understand that the baseband processor and the central processing unit may be processors independent of each other, and are interconnected by using a technology, for example, a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor; or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in embodiments of this application, and the processor 1111 controls the execution. Various types of executed computer program code may also be considered as a driver of the processor 1111.

FIG. 11 merely shows one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation and decoding, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform single-stage or multi-stage down-conversion and analog-to-digital conversion on the radio frequency signal, to obtain a digital baseband signal or a digital intermediate frequency signal. A sequence of the down-conversion and the analog-to-digital conversion is adjustable. The transmitter Tx may selectively perform single-stage or multi-stage up-conversion and digital-to-analog conversion on the modulated digital baseband signal or digital intermediate frequency signal, to obtain the radio frequency signal. A sequence of the up-conversion and the digital-to-analog conversion is adjustable. The digital baseband signal and the digital intermediate frequency signal may be collectively referred to as a digital signal.

The transceiver 1113 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes a receiving unit and a sending unit. The receiving unit may also be referred to as a receiver, an input port, a receiving circuit, or the like. The sending unit may be referred to as a transmitter machine, a transmitter, a transmit circuit, or the like.

It should be noted that the communication apparatus 1100 shown in FIG. 11 may be specifically configured to implement the steps implemented by the baseband unit or the radio frequency unit in the foregoing methods, and implement the technical effects corresponding to the baseband unit or the radio frequency unit. For specific implementations of the communication apparatus 1100 shown in FIG. 11, refer to the descriptions in the foregoing methods. Details are not described here in again.

Division into modules in this application is an example, and is merely logical function division. In actual implementation, another division manner may be used.

In addition, functional modules in embodiments of this application may be integrated into one processor, or may exist alone physically, or two or more modules may be integrated into one module. The integrated module may be implemented in a form of hardware, or may be implemented in a form of a software functional module.

All or some of the technical solutions provided in this application may be implemented by software, hardware, firmware, or any combination thereof. When software is configured to implement the foregoing embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

**1.** A communication method, wherein the method comprises:

determining a first parameter;

performing, on a radio frequency unit side, first clipping processing on data of a first carrier based on the first parameter, to obtain first data; and

performing, on the radio frequency unit side, second clipping processing based on the first data.

2.  The method according to claim 1, wherein performing, on the radio frequency unit side, the second clipping processing based on the first data comprises:

performing filtering processing based on the first data, to obtain second data; and

performing the second clipping processing on the second data.

3.  The method according to claim 2, wherein the method further comprises:
    receiving a second parameter, wherein the second parameter is used to determine a filtering coefficient for the filtering processing.

4.  The method according to any one of claims 1 to 3, wherein the method further comprises:
    receiving a third parameter, wherein the third parameter is used for the second clipping processing.

5.  The method according to any one of claims 1 to 4, wherein the method further comprises:

receiving indication information indicating that clipping processing is enabled; or

receiving indication information indicating that clipping processing is disabled.

6.  A communication method, wherein the method comprises:

determining a first parameter, wherein the first parameter is used for first clipping processing on data of a first carrier, and a processing result of the first clipping processing is used for second clipping processing; and

sending the first parameter.

7.  The method according to claim 6, wherein a filtering processing result of the processing result of the first clipping processing is used for the second clipping processing.

8.  The method according to claim 7, wherein the method further comprises:
    sending a second parameter, wherein the second parameter is used to determine a filtering coefficient corresponding to the filtering processing result.

9.  The method according to any one of claims 6 to 8, wherein the method further comprises:
    sending a third parameter, wherein the third parameter is used for the second clipping processing.

10. The method according to any one of claims 6 to 9, wherein the method further comprises:

sending indication information indicating that clipping processing is enabled; or

sending indication information indicating that clipping processing is disabled.

11. The method according to any one of claims 1 to 10, wherein the first carrier comprises K carrier slices, the first parameter comprises K parameters, the K parameters are respectively used for clipping processing on the K carrier slices, and K is a positive integer.

12. The method according to any one of claims 1 to 11, wherein a time domain resource occupied by the data of the first carrier is N time units, and N is a positive integer.

13. The method according to any one of claims 3 to 5 or claims 8 to 12, wherein the second parameter is determined based on the first parameter.

14. The method according to claim 13, wherein the second parameter is determined based on the first parameter and at least one of the following:
    a passband of the first carrier, a stopband of the first carrier, or a transition band of the first carrier.

15. The method according to any one of claims 1 to 14, wherein the first parameter is determined based on at least one of the following:
    highest power of resource elements REs in a time unit in which the first carrier is located, average power of REs in a time unit in which the first carrier is located, scheduling information of the first carrier, or bandwidth information of the first carrier.

16. A communication apparatus, comprising a unit configured to perform the method according to any one of claims 1 to 5 or claims 11 to 15.

17. A communication apparatus, comprising at least one processor and a memory, wherein the at least one processor is coupled to the memory, and the processor is configured to perform the method according to any one of claims 1 to 5 or claims 11 to 15.

18. A communication apparatus, comprising a unit configured to perform the method according to any one of claims 6 to 15.

**19.** A communication apparatus, comprising at least one processor and a memory, wherein the at least one processor is coupled to the memory, and the processor is configured to perform the method according to any one of claims 6 to 15.

**20.** A communication system, comprising the communication apparatuses according to claims 16 and 18, or comprising the communication apparatuses according to claims 17 and 19.

**21.** A communication method, wherein the method comprises:

determining a first parameter; and
performing, on a radio frequency unit side, first clipping processing on data of a first carrier based on the first parameter, to obtain first data, wherein
the first carrier comprises K carrier slices, the first parameter indicates K parameters, the K parameters are respectively used for clipping processing on the K carrier slices, and K is a positive integer.

**22.** The method according to claim 21, wherein the method further comprises:
performing second clipping processing based on the first data.

**23.** The method according to claim 22, wherein performing the second clipping processing based on the first data comprises:

performing filtering processing based on the first data, to obtain second data; and
performing the second clipping processing on the second data.

**24.** A communication method, wherein the method comprises:

determining a first parameter, wherein the first parameter is used for first clipping processing on data of a first carrier; and
the first carrier comprises K carrier slices, the first parameter comprises K parameters, the K parameters are respectively used for clipping processing on the K carrier slices, and K is a positive integer; and
sending the first parameter.

**25.** The method according to claim 24, wherein a processing result of the first clipping processing is used for second clipping processing.

**26.** The method according to claim 24 or 25, wherein a filtering processing result of the processing result of the first clipping processing is used for the second clipping processing.

**27.** A communication apparatus, comprising a unit configured to perform the method according to any one of claims 21 to 23.

**28.** A communication apparatus, comprising at least one processor and a memory, wherein the at least one processor is coupled to the memory, and the processor is configured to perform the method according to any one of claims 21 to 23.

**29.** A communication apparatus, comprising a unit configured to perform the method according to any one of claims 24 to 26.

**30.** A communication apparatus, comprising at least one processor and a memory, wherein the at least one processor is coupled to the memory, and the processor is configured to perform the method according to any one of claims 24 to 26.

**31.** A communication system, comprising the communication apparatuses according to claims 27 and 29 and the communication apparatuses according to claims 28 and 30.

**32.** A computer-readable storage medium, wherein the medium stores instructions, and when the instructions are executed by a computer, the method according to any one of claims 1 to 16 or claims 21 to 26 is implemented.

**33.** A computer program product, comprising instructions, wherein when the instructions are run on a computer, the computer is enabled to perform the method according to any one of claims 1 to 16 or claims 21 to 26.

FIG. 1

FIG. 2

FIG. 3

```
┌──────────┐                    ┌──────────┐
│ Baseband │                    │  Radio   │
│   unit   │                    │frequency │
│          │                    │   unit   │
└────┬─────┘                    └────┬─────┘
     │                               │
     │    S401: First parameter      │
     │──────────────────────────────▶│
     │                               │
     │        ┌──────────────────────┴──────────┐
     │        │ S402: Perform first clipping     │
     │        │ processing on data of a first    │
     │        │ carrier based on the first       │
     │        │ parameter, to obtain first data; │
     │        │ and perform second clipping      │
     │        │ processing based on the first    │
     │        │ data                             │
     │        └──────────────────────┬──────────┘
     │                               │
```

FIG. 4

| BBU | | AAU/RRU | |

**BBU**      **Clipping parameter**

Scheduling module

Baseband portion 1

eCPRI/ CPRI

**AAU/RRU**

Baseband portion 2

IFFT   Baseband clipping

Time domain data

Intermediate frequency

Filter   Clipping

FIG. 5

Intermediate radio frequency processing

Shaping filtering

Interface processing

Baseband processing

Baseband clipping

$TP_{n,j}$

Clipping threshold (symbol-level)

IFFT

eCPRI

Bit domain & frequency domain processing (optional)

FIG. 6

FIG. 7a

FIG. 7b

Original signal

Signal obtained through
baseband clipping
processing

Signal obtained through
intermediate frequency
clipping processing

FIG. 7c

| Baseband unit | | Radio frequency unit |
| --- | --- | --- |

S801: First parameter

S802: Perform first clipping processing on data of a first carrier based on the first parameter, to obtain first data, where the first carrier includes K carrier slices, and the first parameter includes K parameters that are respectively used for clipping processing on the K carrier slices

FIG. 8

— 900

Communication apparatus

— 901

Processing module

— 902

Transceiver module

FIG. 9

— 1000

Communication apparatus

— 1001

Logic circuit

— 1002

Input/Output interface

FIG. 10

1115

1113

Processor

1111

Tx

1112

Memory

Rx

Network interface

1114

FIG. 11

## INTERNATIONAL SEARCH REPORT

| International application No. |
| --- |
| **PCT/CN2022/143790** |

**A.    CLASSIFICATION OF SUBJECT MATTER**

H04L27/00(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; IEEE; 3GPP: 2次, 2级, 参数, 带宽, 第2, 第二, 调度, 多次, 多级, 功率, 禁止, 两次, 两级, 滤波, 使能, 削波, 载波, 切片, 子载波, 2nd, bandwidth, clipping, multiple, multistage, parameter, power, scheduling, second, subcarrier, twice, carrier wave, carrier slicing, two stage

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114584446 A (HUAWEI TECHNOLOGIES CO., LTD.) 03 June 2022 (2022-06-03) description, paragraphs [0079]-[0346], and figures 1-9 | 1-33 |
| X | CN 111464476 A (BEIJING NUFRONT MOBILE MULTIMEDIA TECHNOLOGY CO., LTD.) 28 July 2020 (2020-07-28) description, paragraphs [0089]-[0280], and figures 1-8 | 1-33 |
| A | CN 101136890 A (ZTE CORP.) 05 March 2008 (2008-03-05) entire document | 1-33 |
| A | CN 1435945 A (SAMSUNG ELECTRONICS CO., LTD.) 13 August 2003 (2003-08-13) entire document | 1-33 |
| A | CN 101222468 A (HUAWEI TECHNOLOGIES CO., LTD.) 16 July 2008 (2008-07-16) entire document | 1-33 |
| A | US 2016212002 A1 (DATANG MOBILE COMMUNICATIONS EQUIPMENT CO., LTD.) 21 July 2016 (2016-07-21) entire document | 1-33 |

☑ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 August 2023** | **06 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/143790**

**C.    DOCUMENTS CONSIDERED TO BE RELEVANT**

| Category* | Citation of document, with indication, where appropriate, of the relevant passages | Relevant to claim No. |
|---|---|---|
| A | US 2012140836 A1 (HELARD JEAN-FRANCOIS et al.) 07 June 2012 (2012-06-07)<br>entire document | 1-33 |

Form PCT/ISA/210 (second sheet) (July 2022)

**INTERNATIONAL SEARCH REPORT**
Information on patent family members

International application No.

**PCT/CN2022/143790**

| Patent document cited in search report | | | Publication date (day/month/year) | Patent family member(s) | | | Publication date (day/month/year) |
|---|---|---|---|---|---|---|---|
| CN | 114584446 | A | 03 June 2022 | WO | 2022111677 | A1 | 02 June 2022 |
| CN | 111464476 | A | 28 July 2020 | None | | | |
| CN | 101136890 | A | 05 March 2008 | CN | 101136890 | B | 21 April 2010 |
| CN | 1435945 | A | 13 August 2003 | KR | 20030064153 | A | 31 July 2003 |
| | | | | KR | 100403637 | B1 | 30 October 2003 |
| | | | | JP | 2003243956 | A | 29 August 2003 |
| | | | | JP | 4017513 | B2 | 05 December 2007 |
| | | | | US | 2003141928 | A1 | 31 July 2003 |
| | | | | US | 6714074 | B2 | 30 March 2004 |
| | | | | FR | 2835364 | A1 | 01 August 2003 |
| CN | 101222468 | A | 16 July 2008 | WO | 2009089753 | A1 | 23 July 2009 |
| | | | | CN | 101222468 | B | 04 August 2010 |
| US | 2016212002 | A1 | 21 July 2016 | EP | 3029902 | A1 | 08 June 2016 |
| | | | | EP | 3029902 | A4 | 31 May 2017 |
| | | | | KR | 20160051868 | A | 11 May 2016 |
| | | | | KR | 101831538 | B1 | 22 February 2018 |
| | | | | JP | 2016533687 | A | 27 October 2016 |
| | | | | JP | 6259918 | B2 | 10 January 2018 |
| | | | | WO | 2015032290 | A1 | 12 March 2015 |
| | | | | US | 9497059 | B2 | 15 November 2016 |
| US | 2012140836 | A1 | 07 June 2012 | US | 8804861 | B2 | 12 August 2014 |
| | | | | ES | 2470743 | T3 | 24 June 2014 |
| | | | | JP | 2012526438 | A | 25 October 2012 |
| | | | | JP | 5632457 | B2 | 26 November 2014 |
| | | | | WO | 2010128057 | A1 | 11 November 2010 |
| | | | | FR | 2945172 | A1 | 05 November 2010 |
| | | | | FR | 2945172 | B1 | 22 April 2011 |
| | | | | EP | 2428012 | A1 | 14 March 2012 |
| | | | | EP | 2428012 | B1 | 12 March 2014 |

Form PCT/ISA/210 (patent family annex) (July 2022)